# EUROPÄISCHE PATENTSCHRIFT

(11) **EP 3 190 093 B1**
(45) Veröffentlichungstag und Bekanntmachung des Hinweises auf die Patenterteilung: **14.02.2018**
(21) Anmeldenummer: 16002608.4
(22) Anmeldetag: 08.12.2016
(51) Int. Cl.: C03B 40/027, C03B 9/447

(54) **VORRICHTUNG ZUR HERSTELLUNG VON HOHLGLASARTIKELN**
DEVICE FOR PRODUCING HOLLOW GLASS ITEMS
DISPOSITIF DE FABRICATION DE PRODUITS EN VERRE CREUX

(30) Priorität: 11.01.2016 DE 102016000135
(43) Veröffentlichungstag der Anmeldung: 12.07.2017
(73) Patentinhaber: Heye International GmbH, 31683 Obernkirchen (DE)
(72) Erfinder: Vorspel, Bernard, 4825 JR Breda (NL)
(74) Vertreter: Sobisch, Peter

(56) Entgegenhaltungen:
- FR-A1- 2 901 551
- JP-A- H1 087 335

## Beschreibung

Die Erfindung bezieht sich auf eine Vorrichtung entsprechend dem Oberbegriff des Anspruchs 1.

Eine Glasformmaschine, insbesondere eine I.S. Maschine umfasst ausgehend von der Zufuhr eines sich in einem schmelzflüssigen Zustand befindlichen Glastropfens bis zum Austrag eines abschließend geformten Hohlglasartikels zahlreiche Baugruppen, Mechanismen, Mess- und Handlingsysteme, die neben einer Überwachung auch einer Wartung bedürfen. Dies betrifft beispielsweise den Schmierungszustand von Formen, insbesondere der Vorformen. Deren, mit dem schmelzflüssigen Glas unmittelbar in Berührung gelangende Flächen bedürfen mit Hinblick auf eine gleichmäßige, im Zeitablauf konstante Produktqualität einer sorgfältigen Schmierung, durch welche beim Einbringen des Glaswerkstoffs, eine gleichmäßige Verteilung innerhalb des Formhohlraums und nach erfolgter Formgebung ein Lösen des mechanisch noch instabilen Vorformlings aus der Form erleichtert werden.

Es ist allgemein bekannt, zum Schmieren der Vorformen ein Handlingsystem wie z. B. einen Roboter einzusetzen, der mit einer Sprüheinrichtung ausgerüstet ist, wobei jedoch keine Überprüfung eines Sprühbildes, der Mengenverteilung auf den Wandungen der Vorform, der Einstellung, insbesondere Positionierung einer Sprüheinrichtung usw. möglich ist. Denn unmittelbar nach Abschluss des Sprühvorgangs wird bereits ein Glastropfen in den Formhohlraum eingeführt, so dass insbesondere eine manuelle Kontrolle des Zustands einer Schmiermittelschicht nicht möglich ist.

Aus der FR 2 901 551 A1 ist ein Verfahren zur automatischen Schmierung der Formen zur Herstellung von Hohlglasartikeln bekannt, wobei ein ein Schmierwerkzeug tragender Roboter entlang der in einer Reihe nebeneinander angeordneten Vorformen einer I.S.-Maschine auf einer Schiene beweglich angeordnet ist. Das Schmierwerkzeug besteht aus einer Lanze, an deren freiem Ende Zerstäuberdüsen angebracht sind und es befinden sich die Formhälften der Vorform während der Schmierung deren Innenwandungen in einem Schließzustand. Zur Schmierung der zugehörigen Mündungsform werden die Formhälften in den Öffnungszustand überführt, wobei stets die Lanze in die Vorform bzw. den Zwischenraum der Formhälften eingeführt wird. Die einzelnen Phasen eines Schmiervorgangs werden unter Mitwirkung einer zentralen Steuerung abgewickelt, wobei sich jedoch keine Informationen hinsichtlich einer Kontrolle der in die Vorformen eingebrachten Schmiermittelschicht finden.

Es ist vor diesem Hintergrund die Aufgabe der Erfindung, eine Vorrichtung der vorstehend erwähnten Art mit Hinblick auf eine wirksame Kontrolle der Schmiermittelbeschichtung der Innenwandungen der eingesetzten Vorformen zu verbessern. Gelöst ist diese Aufgabe bei einer solchen Vorrichtung durch die Merkmale des Kennzeichnungsteils des Anspruchs 1.

Erfindungswesentlich ist hiernach die Bereitstellung einer Kalibrierstation, durch welche eine Prüfposition definiert wird, die in Verbindung mit einer entlang der Reihe der Stationen der I.S.-Maschine beweglich angeordneten und in definierten, jeweils einer Vorform zugeordneten Arbeitspositionen anhaltbaren, zum Auftragen eines Schmiermittels auf die Innenwandungen der Vorform bestimmten Sprüheinrichtung zur Kontrolle und gegebenenfalls Neueinstellung eines Sprühbildes bestimmt und eingerichtet ist. Innerhalb eines Sprühbildes, dessen Lage und Gestalt gleichermaßen zu prüfen sind, können weitere Parameter des aufgetragenen Schmiermittels kontrolliert werden, insbesondere die Dicke und Gleichförmigkeit der Schmiermittelschicht innerhalb des Sprühbildes. Die Kalibrierstation ist in vielfältiger Weise nutzbar. Sie kann beispielsweise zur Kontrolle der korrekten Funktion sowie Positionierung der Sprüheinrichtung benutzt werden. Hierbei können beispielsweise auch Verstopfungen oder sonstige Störungen in der Schmiermittelversorgung erkannt werden. Die Kalibrierstation kann zu korrigierenden Eingriffen in die Einstellung der Sprüheinrichtung benutzt werden, soweit diese die Lage und die Beschaffenheit des Schmiermittels innerhalb des Sprühbildes betreffen. Sie kann schließlich zur Erstellung eines Sprühplanes bei Einsatz einer neuen Sorte eines Schmiermittels herangezogen werden, wobei es beispielsweise um die Dicke einer Schmiermittelschicht oder auch deren Verteilung geht. Über die Optimierung des Sprühbildes durch Anpassung der Dicke einer Schmiermittelschicht innerhalb der Vorform ist ein bedeutender Beitrag zur Darstellung einer optimalen Tropfenladung in der Vorform gegeben.

Gemäß den Merkmalen des Anspruchs 2 ist in der Kalibrierstation eine Testform vorgesehen, welche als Referenzform für die Bereitstellung eines funktionsgerechten Sprühbildes benutzt wird. Die Testform bildet die Gestalt und Lage der regulären Vorformen nach, so dass eine Einstellung sämtlicher Parameter der Sprüheinrichtung anhand einer Ausrichtung des Sprühbildes in der Testform erreichbar ist. Dies wird durch eine dementsprechende Ausrichtung von Arbeits- und Prüfposition erreicht.

Die Testform besteht entsprechend den Merkmalen des Anspruchs 3 in gleicher Weise wie die Vorform aus zwei Formhälften, die zwischen einer Öffnungs- und einer Schließstellung schwenkbar sind. Regelmäßig wird das Einbringen eines Schmiermittels im geöffneten Zustand der Testform bzw. der Vorform erfolgen.

Die Merkmale des Anspruchs 4 sind auf die weitere Ausgestaltung, insbesondere Ausrüstung der Kalibrierstation gerichtet. Diese ist hiernach mit Hinblick auf eine teilweise automatische Einleitung und Durchführung einer Analyse des Sprühbildes ausgebildet, womit ein Beitrag zur Erzielung stabiler, insbesondere reproduzierbarer Prüfungsergebnisse gegeben ist. Unter Mitwirkung einer Kamera in Verbindung mit einer rechnergestützten Auswertung sind eine Reihe von Eigenschaften des Sprühbildes einfach und schnell ermittelbar, so dass die Darstellung eines rasch abwickelbaren Prüfvorgangs erreichbar ist.

Gemäß den Merkmalen des Anspruchs 5 ist die Kalibriereinrichtung mit Mitteln zum automatischen Wechsel von Sprühwerkzeugen ausgerüstet. Auf diese Weise wird deren Fähigkeit zur automatischen Anpassung an geänderte Bedingungen des Schmierungsvorgangs verbessert.

Die Merkmale des Anspruchs 6 sind auf eine Konkretisierung der Anordnung und Führung der Sprüheinrichtung gerichtet. Hierzu ist ein mehrteiliges bzw. mehrgliedriges Manipulationsorgan vorgesehen, welches in einem verfahrbar angeordneten Gehäuse gehalten ist und durch welches aufgrund seines konstruktiven Aufbaus die notwendigen Bewegungsachsen für eine optimale Positionierung der Sprüheinrichtung relativ zu den zu besprühenden Innenflächen der Testform sowie der Vorformen gegeben ist. Das Gehäuse bildet somit ein bewegliches Trägersystem für die Sprüheinrichtung. Sämtlichen der Bewegungsachsen des Manipulationsorgans sind Antriebe zugeordnet, so dass eine exakte und reproduzierbare Positionierung der Sprüheinrichtung möglich ist.

Die Merkmale der Ansprüche 7 und 8 sind auf die weitere konstruktive Konkretisierung der Kalibrierstation gerichtet. Wesentlich ist, dass diese ein Gehäuse aufweist, welches eine im Verhältnis zu der Glasformmaschine offene schüsselartige Struktur bildet und im Übrigen geschlossen ausgebildet ist. Der Prüfvorgang, insbesondere die Bewegungen des Manipulationsorganes finden somit in einem geschützten Raum statt, so dass von diesem keine Unfallgefahren ausgehen.

Man erkennt anhand der vorstehenden Ausführungen, dass mit dem Erfindungsgegenstand eine einfache Möglichkeit gegeben ist, das aus einem Schmiermittel bestehende Sprühbild in der Vorform einer Glasformmaschine in reproduzierbarer Weise einzurichten sowie zu kontrollieren und auf diese Weise die Gleichförmigkeit der Tropfenladung in der Vorform zu verbessern.

Die Erfindung wird im Folgenden unter Bezugnahme auf die beiliegenden Zeichnungen näher erläutert werden. Es zeigen:
Fig. 1 eine Darstellung eines seitlichen Endabschnitts einer Glasformmaschine in einer Draufsicht;
Fig. 2 eine Darstellung gemäß Fig. 1 in vergrößerter Ansicht;
Fig. 3 eine teilweise Seitenansicht der Glasformmaschine entsprechend einer Blickrichtung III der Fig. 2;

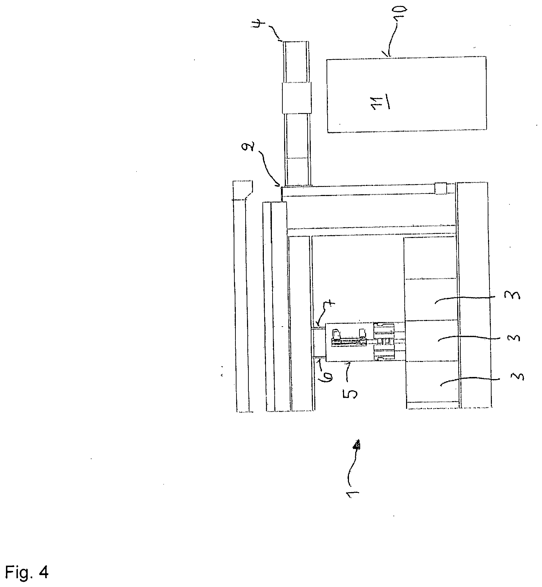

Fig. 4 eine Ansicht des Endabschnitts der Glasformmaschine entsprechend einer Blickrichtung IV der Fig. 1;
Fig. 5 eine Darstellung gemäß Fig. 3 in vergrößerter Ansicht;
Fig. 6 eine Teilansicht entsprechend einer Schnittebene VI - VI der Fig. 1

Es wird zunächst auf die Zeichnungsfiguren 1 bis 3 Bezug genommen..

In diesen ist mit 1 eine Glasformmaschine, nämlich eine I:S.-Maschine bezeichnet, in deren Maschinenrahmen 2 eine Vielzahl von Stationen 3 gehalten sind, in denen jeweils mehrere Vorformen aufgenommen sind. Die Stationen 3 sind nebeneinander angeordnet und es erstreckt sich auf der, die Vorformen tragenden Seite des Maschinenrahmens 2 eine schienenartige Führung 4, die an einem oberen Bereich des Maschinenrahmens 2 angebracht ist.

Die Führung 4 erstreckt sich parallel zu der Aufstandfläche der Glasformaschine 1 und es ist an dieser ein Gehäuse 5 angehängt, welches in zeichnerisch nicht dargestellter Weise motorisch von dem einen Ende der Führung 4 bis zu deren anderen Ende verfahrbar und in beliebigen Zwischenstellungen arretierbar ist. Das Gehäuse 5 ist zu diesem Zweck mit zwei voneinander beabstandeten Haltern 6, 7 versehen, die im Eingriff mit der Führung 4 stehen.

Das Gehäuse 5 dient u. a. der Aufnahme einer Sprüheinrichtung 8, welche an dem freien Ende eines mehrgelenkigen Manipulationsorgans 9 angebracht ist. Das Manipulationsorgan 9 ist zwischen einer inaktiven, nämlich weitestgehend in das Gehäuse 5 zurückgezogenen Stellung und einer aktiven Stellung, in der die Sprüheinrichtung 8 sich in einer zum Übertragen eines Schmiermittels auf die Innenflächen einer Vorform geeigneten Lage befindet, verschwenkbar. Dieser Schwenkbewegung ist ein zeichnerisch nicht dargestellter Antrieb zugeordnet, der mit einer Maschinensteuerung der Glasformmaschine 1 in Verbindung steht, so dass die Schwenkbewegung motorisch ausgeführt werden kann. Das Manipulationsorgan 9 ist im Übrigen mit der Maßgabe ausgebildet, insbesondere mit einer solchen Anzahl an Bewegungsachsen versehen, welche zur Darstellung einer zur Ausführung des Sprühvorgangs hinreichenden Beweglichkeit, insbesondere Positionierbarkeit der Sprüheinrichtung 8 erforderlich ist.

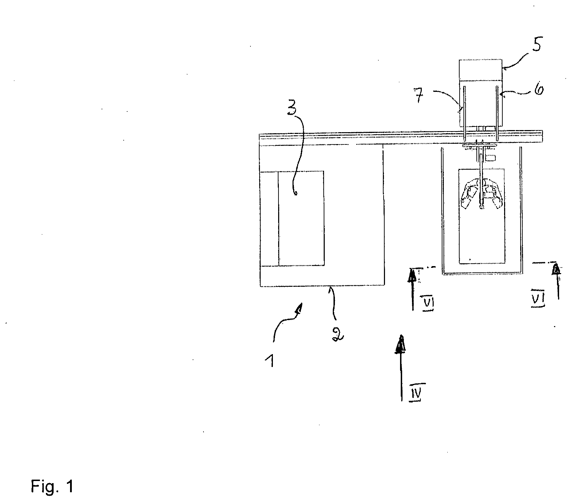

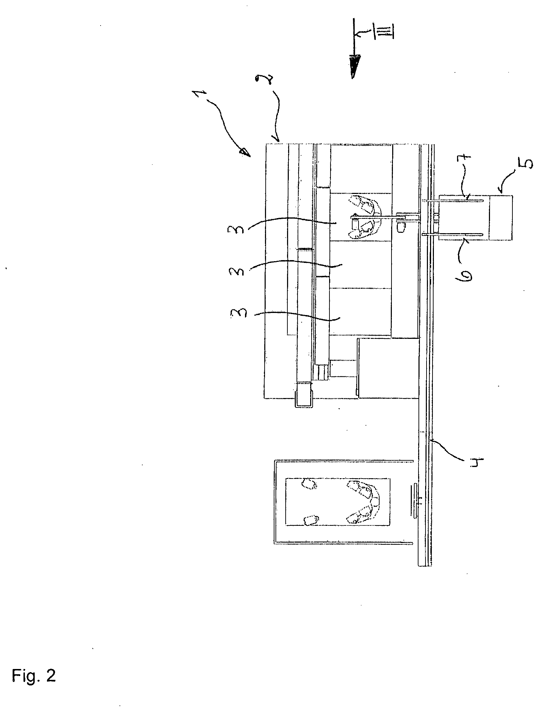

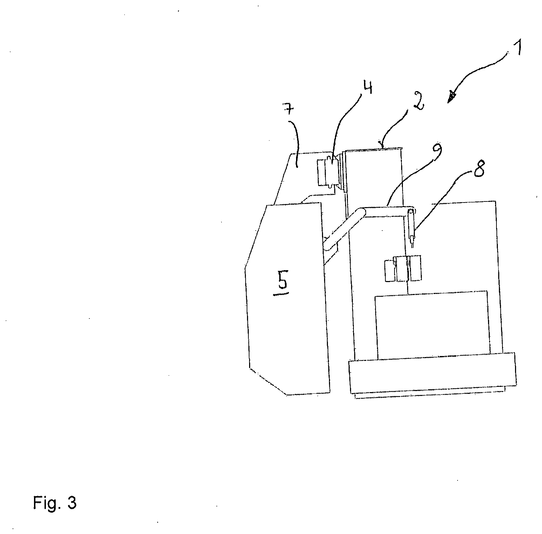

Es wird im Folgenden ergänzend auf die Zeichnungsfiguren 4 bis 6 Bezug genommen, in denen Funktionselemente, die mit denjenigen der Figuren 1 bis 3 übereinstimmen, entsprechend beziffert sind, so dass auf eine diesbezügliche Beschreibung verzichtet werden kann.

Die Führung 4 erstreckt sich über ein seitliches Ende der Glasformmaschine 1 hinaus bis zu einer Kalibrierstation 10 und es ist diese derart angeordnet, dass das Gehäuse 5 bis in eine der Kalibrierstation 10 gegenüberliegende Position, einer Prüfposition verfahrbar ist, in der es in Wechselwirkung mit dieser treten kann. Die Kalibrierstation 10 besteht aus einem Gehäuse 11, welches zumindest teilweise auch als Schutzgitter ausgebildet sein kann, welches in Richtung auf das Gehäuse 5 hin offen, im Übrigen jedoch geschlossen ausgebildet ist.

Das Gehäuse 11 beinhaltet eine Testform 12, welche strukturell den in der Glasformmaschine 1 im Übrigen eingesetzten Vorformen entspricht. Die Testform 12 befindet sich ferner in einer solchen Position, und zwar hinsichtlich ihrer Höhe und Orientierung im Verhältnis zu dem Gehäuse 5, welche derjenigen der Vorformen der Glasformmaschine 1 entspricht.

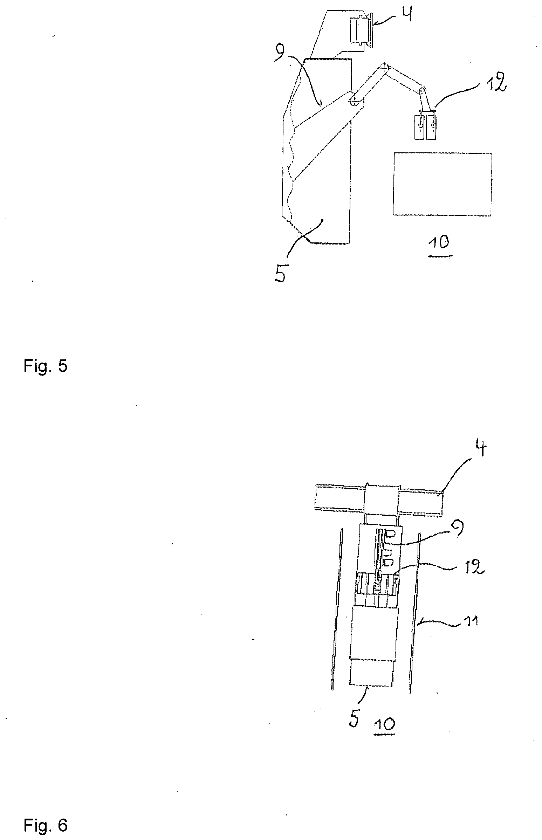

Die Kalibrierstation 10 kann ergänzend mit einer zeichnerisch nicht dargestellten Kamera oder einem sonstigen Messsystem ausgerüstet sein, welche in Verbindung mit einer rechnergestützten Auswertung, insbesondere Bildverarbeitung dazu bestimmt und eingerichtet sind, die Verteilung einer Schmiermittelschicht auf der Innenseite des Formhohlraums der Testform 12 zu erfassen und einer Auswertung zuzuführen. In Fig. 5 ist aus Gründen der Übersichtlichkeit auf eine Darstellung des Gehäuses der Kalibrierstation 10 verzichtet worden.

Das Ergebnis einer solchen Überprüfung einer auf die genannten Innenseiten der Testform 12 aufgetragenen Schmiermittelschicht kann in vielfältiger Form benutzt werden. In diese Überprüfung einbezogen sind insbesondere ein Sprühbild, die Schichtdicke einer übertragenen Schmiermittelschicht, deren Gleichförmigkeit und Lage auf den Innenseiten der Testform 12 usw. Auf diese Weise können Fehleinstellungen des Manipulationsorgans 9 des Gehäuses 5 sowie einer an diesem angeordneten Sprüheinrichtung 8 einschließlich Defekte wie z. B. einer teilweisen Verstopfung von Austrittsöffnungen der Sprüheinrichtung 8 ermittelt werden und zwar mit dem Ziel, diese Defekte und Fehleinstellungen zu korrigieren, so dass ein regulärer Betrieb der Glasformmaschine 1 mit einer in jeder Hinsicht korrekt funktionierenden Schmierung der Vorformen aufgenommen werden kann.

Das Ergebnis einer solchen Überprüfung kann insbesondere dazu benutzt werden, ein Sprühbild zu optimieren, und zwar mit Hinblick auf die Darstellung einer für eine optimale Tropfenladung in der Vorform günstigste Schmiermitteldicke und flächige Schmiermittelverteilung auf den Innenwandungen der Vorform.

Die wie die Vorformen aus zwei Formhälften bestehende Testform 12 befindet sich während des dargestellten Prüfvorgangs vorzugsweise in einer Öffnungsstellung.

Man erkennt, dass mit der Anordnung einer Kalibrierstation 10 an einer Glasformmaschine 1 auf der Grundlage einer Bewertung des festgestellten Sprühbildes eine zuverlässige Überprüfung einer korrekten Funktion der Sprüheinrichtung 8 einschließlich deren Manipulationsorgans gegeben ist, so dass im Bedarfsfall beispielsweise Korrekturen an Einstellungen vorgenommen und schadhafte Bauteile instandgesetzt oder ausgetauscht werden können, und zwar mit dem Ziel, ein funktionsgerechtes Sprühbild darzustellen, welches anschließend dem Betrieb der Glasformmaschine zugrunde gelegt wird.

### Bezugszeichenliste:

- 1.: Glasformmaschine
- 2.: Maschinenrahmen
- 3.: Station
- 4.: Führung
- 5.: Gehäuse
- 6.: Halter
- 7.: Halter
- 8.: Sprüheinrichtung
- 9.: Manipulationsorgan
- 10.: Kalibrierstation
- 11.: Gehäuse
- 12.: Testform

## Patentansprüche

1. Vorrichtung zur Herstellung von Hohlglasartikeln, nämlich I.S.-Maschine bestehend aus einer Vielzahl von nebeneinander angeordneten, jeweils zumindest eine Vorform umfassenden Stationen (3) mit einer, entlang der Reihe der Stationen (3) verfahrbaren und in diskreten, jeweils einer Station (3) zugeordneten Arbeitspositionen anhaltbaren Sprüheinrichtung (8) zum Auftragen eines Schmiermittels auf die Innenseiten des Formhohlraums einer Vorform, **gekennzeichnet durch** eine zur Prüfung sowie zur Einstellung eines die Verteilung des Schmiermittels in einer definierten Fläche auf den Innenwandungen einer Vorform darstellenden Sprühbildes eingerichteten Kalibrierstation (10), wobei die Sprüheinrichtung (8) zusätzlich in eine Prüfposition, der Kalibrierstation(10) zugeordnet, verfahrbar ist.

2. Vorrichtung nach Anspruch 1, **dadurch gekennzeichnet, dass** die Kalibrierstation (10) mit einer Testform (12) ausgerüstet ist und dass die Testform (12) in einer solchen Position relativ zu der sich in der Prüfposition befindlichen Sprüheinrichtung (8) angeordnet ist, welche derjenigen der Sprüheinrichtung (8) in einer Arbeitsposition gegenüber einer Vorform entspricht.

3. Vorrichtung nach Anspruch 1 oder 2, **dadurch gekennzeichnet, dass** die Testform (12) aus zwei Formhälften besteht, die zwischen einer Öffnungs- und einer Schließstellung schwenkbar sind.

4. Vorrichtung nach einem der Ansprüche 1 bis 3, **dadurch gekennzeichnet, dass** die Kalibrierstation (10) mit wenigstens einer Kamera oder einer Messeinrichtung zur Erfassung eines Sprühbildes sowie wenigstens eines Parameters einer Schmiermittelschicht innerhalb des Sprühbildes ausgerüstet ist.

5. Vorrichtung nach einem der Ansprüche 1 bis 4, **dadurch gekennzeichnet, dass** die Prüfposition der Sprüheinrichtung (8) mit Mitteln zum automatischen Wechsel von Sprühwerkzeugen ausgerüstet ist.

6. Vorrichtung nach einem der Ansprüche 1 bis 5, **dadurch gekennzeichnet, dass** die Sprüheinrichtung (8) an dem einen Ende eines Manipulationsorgans (9) befestigt ist, dessen anderes Ende in einem Gehäuse (5) gelagert ist, dass das Gehäuse (5) zum Führen weiterer für Instandsetzungs- und Einstellungszwecke bestimmter Werkzeuge eingerichtet ist und dass das Gehäuse entlang der Glasformmaschine (1) bis in die genannte Prüfposition, der Kalibrierstation (10) gegenüberliegend verfahrbar ist.

7. Vorrichtung nach einem der Ansprüche 1 bis 6, **dadurch gekennzeichnet, dass** die Kalibrierstation(10) ein schüsselartiges, in Richtung auf die Glasformmaschine (1) hin offenes und im Übrigen geschlossenes Gehäuse (11) aufweist.

8. Vorrichtung nach Anspruch 7, **dadurch gekennzeichnet, dass** das Gehäuse (11) wenigstens teilweise eine gitterartige Struktur aufweist.

## Claims

1. Device for producing hollow glass articles, namely an I.S. machine, consisting of a plurality of mutually adjacent stations (3) each comprising at least one parison mould and having a spraying device (8), which can travel along the row of stations (3) and be stopped in discrete working positions assigned to a station (3), for applying a lubricant onto the insides of the mould cavity of a parison mould, **characterised by** a calibration station (10) designed for checking and for adjusting a spray pattern representing the distribution of the lubricant in a defined surface area on the inner walls of a parison mould, wherein the spraying device (8) can additionally travel into a checking position assigned to the calibration station (10).

2. Device as claimed in claim 1, **characterised in that** the calibration station (10) is equipped with a test mould (12) and that the test mould (12) is disposed in a position - relative to the spraying device (8), which is in the checking position - which corresponds to that of the spraying device (8) in a working position opposite a parison mould.

3. Device as claimed in claim 1 or 2, **characterised in that** the test mould (12) consists of two mould halves which can pivot between an open and closed position.

4. Device as claimed in any one of claims 1 to 3, **characterised in that** the calibration station (10) is equipped with at least one camera or a measuring device for detecting a spray pattern as well as at least one parameter of a lubricant layer within the spray pattern.

5. Device as claimed in any one of claims 1 to 4, **characterised in that** the checking position of the spraying device (8) is equipped with means for automatic changing of spraying tools.

6. Device as claimed in any one of claims 1 to 5, **characterised in that** the spraying device (8) is fastened to one end of an operating member (9), the other end of which is mounted in a housing (5), that the housing (5) is designed for guiding further tools intended for repair and adjustment purposes, and that the housing can travel along the glassware forming machine (1) into said checking position, opposite the calibration station (10).

7. Device as claimed in any one of claims 1 to 6, **characterised in that** the calibration station (10) comprises a bowl-like housing (11) which is open in the direction of the glassware forming machine (1) and is otherwise closed.

8. Device as claimed in claim 7, **characterised in that** the housing (11) at least partially comprises a lattice-like structure.

## Revendications

1. Dispositif servant à fabriquer des articles en verre creux, à savoir une machine IS, constitué par une pluralité de postes (3) disposés les uns à côté des autres, comprenant respectivement au moins une préforme, pourvues d'un système de pulvérisation (8) pouvant être déplacé le long de la rangée de postes (3) et pouvant être retenu dans des positions de travail discrètes associées respectivement à un poste (3), servant à appliquer un agent de lubrification sur les côtés intérieurs de la cavité de moule d'une préforme, **caractérisé par** un poste d'étalonnage (10) mis au point aux fins du contrôle ainsi qu'aux fins du réglage d'un schéma de pulvérisation illustrant la répartition de l'agent de lubrification dans une surface définie sur les parois intérieures d'une préforme, dans lequel le système de pulvérisation (8) peut être déplacé en supplément dans une position de contrôle associée au poste d'étalonnage (10).

2. Dispositif selon la revendication 1, **caractérisé en ce que** le poste d'étalonnage (10) est équipé d'un moule de test (12), et que le moule de test (12) est disposé dans une position par rapport au système de pulvérisation (8) se trouvant dans la position de contrôle telle qu'elle correspond à celle du système de pulvérisation (8) dans une position de travail par rapport à une préforme.

3. Dispositif selon la revendication 1 ou 2, **caractérisé en ce que** le moule de test (12) est constitué par deux moitiés de moule, qui peuvent pivoter entre une position d'ouverture et une position de fermeture.

4. Dispositif selon l'une quelconque des revendications 1 à 3, **caractérisé en ce que** le poste d'étalonnage (10) est équipé d'au moins une caméra ou d'un système de mesure servant à détecter un schéma de pulvérisation ainsi qu'au moins un paramètre d'une couche d'agent de lubrification à l'intérieur du schéma de pulvérisation.

5. Dispositif selon l'une quelconque des revendications 1 à 4, **caractérisé en ce que** la position de contrôle du système de pulvérisation (8) est équipée de moyens servant à changer de manière automatique des outils de pulvérisation.

6. Dispositif selon l'une quelconque des revendications 1 à 5, **caractérisé en ce que** le système de pulvérisation (8) est fixé au niveau d'une extrémité d'un organe de manipulation (9), dont l'autre extrémité est montée dans un boîtier (5), que le boîtier (5) est mis au point afin de guider d'autres outils se destinant à des fins de réparations et de réglage, et que le boîtier peut être déplacé de manière opposée le long de la machine à mouler le verre (1) jusque dans la position de contrôle évoquée du poste d'étalonnage (10).

7. Dispositif selon l'une quelconque des revendications 1 à 6, **caractérisé en ce que** le poste d'étalonnage (10) présente un boîtier (11) de type clé, ouvert en direction de la machine à mouler le verre (1) et par ailleurs fermé.

8. Dispositif selon la revendication 7, **caractérisé en ce que** le boîtier (11) présente au moins en partie une structure à la manière d'une grille.
